# EUROPÄISCHE PATENTSCHRIFT

(11) **EP 4 249 788 B1**
(45) Veröffentlichungstag und Bekanntmachung des Hinweises auf die Patenterteilung: **23.10.2024**
(21) Anmeldenummer: 23150899.5
(22) Anmeldetag: 10.01.2023
(51) Int. Cl.: F16L 55/26, F16L 55/40, E03F 7/12, E03F 3/06

(54) **VORRICHTUNG ZUR KANALROHRINSPEKTION UND/ODER -SANIERUNG EINER VON EINEM HAUPTKANAL ABZWEIGENDEN ANSCHLUSSLEITUNG**
DEVICE FOR INSPECTING AND/OR RENOVATING A CONNECTION PIPE BRANCHING FROM A MAIN CHANNEL
DISPOSITIF D'INSPECTION ET/OU DE RÉNOVATION DE CANALISATIONS D'UNE CONDUIT DE RACCORDEMENT DÉRIVANT D'UN CANAL PRINCIPAL

(30) Priorität: 22.03.2022 DE 102022106692
(43) Veröffentlichungstag der Anmeldung: 27.09.2023
(73) Patentinhaber: IBAK Helmut Hunger GmbH & Co. KG, 24148 Kiel (DE)
(72) Erfinder: Koernig, Jonas, 24161 Altenholz (DE); Stock, Markus, 24106 Kiel (DE)
(74) Vertreter: Lobemeier, Martin Landolf

(56) Entgegenhaltungen:
- EP-B1- 1 070 905
- DE-A1- 102020 210 713
- ANONYMOUS: "LISY gestern und heute: Ein Welterfolg wird 25", B_I UMWELTBAU,, no. 4, 18 July 2018 (2018-07-18), pages 73 - 75, XP009542230

## Beschreibung

Die Erfindung betrifft eine Vorrichtung zur Kanalrohrinspektion und/oder -sanierung einer von einem Hauptkanal abzweigenden Anschlussleitung. Insbesondere betrifft die Erfindung eine Vorrichtung zur Kanalrohrinspektion und/oder -sanierung einer von einem Hauptkanal abzweigenden Anschlussleitung, mit einem Fahrwagen, der eine Vorderachse und eine Hinterachse aufweist, und einem am Fahrwagen angeordneten lateralen Inspektions- und/oder Sanierungssystem, das einen mit dem Fahrwagen lösbar verbundenen Adapter, eine im Adapter mittels eines Schiebestabs verschieblich gelagerte Inspektions- und/oder Sanierungseinheit, und ein am Adapter mittels eines ersten Gelenks verschwenkbar gelagertes, zur Führung der Inspektions- und/oder Sanierungseinheit aus einem Hauptkanal in eine Anschlussleitung eingerichtetes Führungselement aufweist.

Derartige Vorrichtungen zur Kanalrohrinspektion und/oder -sanierung sind bereits aus offenkundiger Vorbenutzung, insbesondere aber aus der DE 10 2020 210 713 A1 und der EP 1 070 905 B1 bekannt. Die Vorrichtungen sind regelmäßig modular aufgebaut und weisen ein universell einsetzbares Fahrwagenmodul auf, das mittels eines Adapters, eines im Adapter verschieblich gelagerten Satellitensystems und eines beispielsweise als Rohr ausgebildeten Führungselements zur Inspektion von von einem Hauptkanal abzweigenden Anschlussleitungen an unterschiedliche Rohrdurchmesser des Hauptkanals angepasst werden können.

So wird insbesondere durch Verschwenken des freien Endes unterschiedlich langer Führungselemente erreicht, dass ein mit dem Fahrwagen mitgeführtes Satellitensystem in Anschlussleitungen von Hauptkanälen unterschiedlicher Nennweite von beispielsweise DN150 bis DN 2000 eingeführt werden kann und dort Inspektions- und/oder Sanierungsarbeiten ausgeführt werden können.

Nachteilig an diesen bekannten Vorrichtungen ist jedoch, dass die Vorrichtung jeweils an die Nennweite des Hauptkanals angepasst werden muss, sodass zwischen verschiedenen Einsatzorten zum Austausch der Führungselemente lange (Um-)Rüstzeiten in Kauf genommen werden müssen. Gleichzeitig ist zu beobachten, dass sich der Durchmesser eines Hauptkanals entlang einer zu inspizierenden oder zu sanierenden Strecke ändern kann, sodass eine Inspektion oder Sanierung nicht in einem Arbeitsschritt möglich ist.

Darüber hinaus besteht das Problem bei Hauptkanälen mit großer Nennweite, die den Einsatz eines langen Führungselements erfordern, dass die mit einem langen Führungselement ausgestattete Vorrichtung zur Kanalrohrinspektion und/oder -sanierung eine Höhe und/oder eine Länge erreichen kann, die verhindert, dass die Vorrichtung durch den Schacht als Ganzes in den Hauptkanal eingebracht werden kann. Vielmehr muss die Vorrichtung in einem solchen Fall innerhalb des Schachts eingerichtet werden, sodass weiterer Zeitbedarf hinsichtlich der Rüstzeit der Vorrichtung und der Einrichtung von entsprechenden Sicherheitsmaßnahmen zum Betreten des Schachts bestehen.

Schließlich weisen die bekannten Vorrichtungen den Nachteil auf, dass aufgrund der Verwendung von langen Führungselementen das Problem besteht, dass der Fahrwagen beim Durchführen des Satellitensystem durch das Führungselement zu Kippen und im Rohr zu Verkanten droht.

Aufgabe der Erfindung ist es daher, eine Vorrichtung zur Kanalrohrinspektion und/oder - sanierung einer von einem Hauptkanal abzweigenden Anschlussleitung zu schaffen, mit der eine Vielzahl von Hauptkanälen unterschiedlichen Durchmessers befahren und davon abzweigende Anschlussleitungen erreicht werden können, ohne dass lange (Um-)Rüstzeiten erforderlich sind oder die Gefahr eines Kippens und Verkanten des Fahrwagens besteht.

Diese Aufgabe wird erfindungsgemäß durch die Vorrichtung mit den Merkmalen von Anspruch 1 gelöst. Die Unteransprüche geben vorteilhafte Ausgestaltungen der Erfindung wieder.

Der Grundgedanke der Erfindung besteht darin, zu dem bekannten, ein Verschwenken des freien Endes des Führungselements ermöglichenden ersten Gelenk zusätzlich ein zweites Gelenk vorzusehen, das ein Anheben des Führungselements insgesamt und damit auch ein Anheben des ersten Gelenks ermöglicht, das dadurch weiter in Richtung der Rohrmitte gelangt, um - ohne im Wesentlichen den Schwerpunkt des Gesamtsystems anzuheben - mit dem freien Ende auch Anschlussleitungen in Hauptkanälen mit großem Durchmesser zu erreichen. Dabei ist bevorzugt vorgesehen, dass die beiden Gelenke maximal weit entfernt voneinander angeordnet sind, ohne jedoch die Hauptabmessung des Gesamtsystems zu vergrößern - dieses erfolgt insbesondere dadurch, dass das erste Gelenk vor der Vorderachse des Fahrwagens und das zweite Gelenk im Bereich der Hinterachse des Fahrwagens angeordnet ist. Durch diese Ausgestaltung ist es möglich, die Länge des Führungselements möglichst gering zu halten, zugleich aber auch Anschlussleitungen in Hauptkanälen mit großer Nennweite zu erreichen. Aufgrund der Kompaktheit der erfindungsgemäß ausgestalteten Vorrichtung kann ein niedriger Schwerpunkt verwirklicht werden, wobei auch bei einer geringen Auskragung des Führungselements über die Vorderachse des Fahrwagens hinaus nur geringe Kippmomente auftreten, sodass die Vorrichtung insgesamt eine hohe Standsicherheit aufweist. Dieses ist insbesondere bei eiförmigen Rohrprofilen von Vorteil. Schließlich werden auch sich aus einem Neigen des Führungsrohrs ergebende scharfe Biegeradien des Schiebestabs vermieden, sodass ein Vorschub des Satellitensystems in den Abzweiger leichter verwirklicht werden kann.

Schließlich ist die erfindungsgemäß ausgestaltete Vorrichtung an Hauptkanäle mit unterschiedlicher Nennweite anpassbar, ohne dass die Vorrichtung umgerüstet werden müsste.

Erfindungsgemäß wird also eine Vorrichtung zur Kanalrohrinspektion und/oder -sanierung einer von einem Hauptkanal abzweigenden Anschlussleitung vorgeschlagen, wobei die Vorrichtung einen Fahrwagen, der eine Vorderachse und eine Hinterachse besitzt, und ein am Fahrwagen angeordnetes laterales Inspektions- und/oder Sanierungssystem aufweist, das einen mit dem Fahrwagen lösbar verbundenen Adapter, eine im Adapter mittels eines Schiebestabs verschieblich gelagerte Inspektions- und/oder Sanierungseinheit, und ein am Adapter mittels eines ersten Gelenks verschwenkbar gelagertes, zur Führung der Inspektions- und/oder Sanierungseinheit aus einem Hauptkanal in eine Anschlussleitung eingerichtetes Führungselement aufweist, wobei der Adapter an einem dem Führungselement gegenüberliegenden Abschnitt mittels eines zweiten Gelenks um eine parallel zu den Radachsen angeordnete Achse relativ zum Fahrwagen verschwenkbar gelagert ist, wobei das ein Verschwenken des Führungselements gegenüber dem Adapter bewirkende erste Gelenk im Bereich vor der Vorderachse des Fahrwagens und das ein Verschwenken des Adapters gegenüber dem Fahrwagen bewirkende zweite Gelenk im Bereich der Hinterachse des Fahrwagens angeordnet ist.

Bei dem zweiten Gelenk handelt es sich also um ein einfaches Drehgelenk, das ein Verschwenken des ersten Gelenks auf einem um die Drehachse des zweiten Gelenks gedachten Kreisbogen erlaubt.

Das ein Verschwenken des Führungselements gegenüber dem Adapter bewirkende erste Gelenk ist erfindungsgemäß im Bereich vor der Vorderachse des Fahrwagens angeordnet und erlaubt primär ein Verschwenken des Führungselements um eine parallel zu den Radachsen ausgerichtete Achse. Besonders bevorzugt ist das erste Gelenk jedoch als Dreh-Kippgelenk ausgebildet, sodass das Führungselement zusätzlich zum Verschwenken auch gedreht werden kann. Gemäß dieser besonders bevorzugten Ausgestaltung ist es nicht nur durch Anheben des freien Endes des Führungselements möglich, Anschlussleitungen oberhalb des Fahrwagens, sondern durch gleichzeitiges Drehen des Führungselements auch seitlich in den Hauptkanal mündende Anschlussleitungen zu erreichen.

Das ein Verschwenken des Adapters gegenüber dem Fahrwagen bewirkende zweite Gelenk hingegen ist erfindungsgemäß im Bereich der Hinterachse des Fahrwagens angeordnet, sodass sich der Adapter über die Länge des Fahrwagens erstreckt. Insbesondere erstreckt sich das Führungselement nur wenig über die Vorderachse des Fahrwagens, sodass bei gleichzeitigem Verschwenken des Führungselements und des Adapters relativ zum Fahrwagen nur ein geringes Kippmoment resultiert.

Weiter ist bevorzugt vorgesehen, dass das Verschwenken des Adapters mittels eines Antriebs erfolgt, der zwar auch vom Fahrwagen bereitgehalten werden kann, bevorzugt jedoch als Bestandteil des Adapters selbst ausgebildet ist. Der Antrieb ist dabei besonders bevorzugt als Spindelantrieb ausgebildet, wobei die für den Antrieb erforderliche elektrische Energie durch den Fahrwagen bereitgestellt wird.

Weiter ist bevorzugt eine die im Adapter verschieblich gelagerte Inspektions- und/oder Sanierungseinheit vorschiebende und zurückziehende Vorschubeinheit vorgesehen, die entweder Bestandteil des Adapters oder als modular am Adapter anzuordnende Einheit ausgebildet ist. Speziell ist vorgesehen, dass die Vorschubeinheit zwischen dem Adapter und dem Führungselement angeordnet ist, wobei Fahrwagen, Adapter, Vorschubeinheit und Führungselement als miteinander verbindbare Module ausgebildet sind, die für den jeweiligen Verwendungszweck unterschiedlich ausgebildet sein können.

Schließlich ist vorgesehen, dass das Führungselement als Führungsschiene oder als Führungsrohr ausgebildet ist.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine Seitenansicht einer besonders bevorzugt ausgestalteten Vorrichtung zur Kanalrohrinspektion und/oder -sanierung einer von einem Hauptkanal abzweigenden Anschlussleitung mit gesenktem Führungselement; und
- Fig. 2: eine Seitenansicht der in Fig. 1 dargestellten Vorrichtung mit vollständig angehobenem Führungselement in einem Rohr.

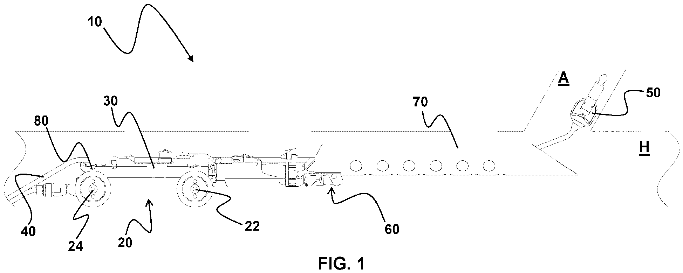

Fig. 1 zeigt eine Seitenansicht einer besonders bevorzugt ausgestalteten Vorrichtung zur Kanalrohrinspektion und/oder -sanierung einer von einem Hauptkanal abzweigenden Anschlussleitung mit gesenktem Führungselement.

Insbesondere zeigt Fig. 1 eine besonders bevorzugt ausgestaltete Vorrichtung 10 zur Kanalrohrinspektion und/oder -sanierung einer von einem Hauptkanal H abzweigenden Anschlussleitung A, mit einem Fahrwagen 20, der eine Vorderachse 22 und eine Hinterachse 24 aufweist. Auf dem Fahrwagen 20 ist ein laterales Inspektions- und/oder Sanierungssystem vorgesehen, das einen mit dem Fahrwagen 20 lösbar verbundenen Adapter 30 aufweist. Im Adapter 30 ist eine mittels eines Schiebestabs 40 verschieblich gelagerte Inspektions- und/oder Sanierungseinheit 50 vorgesehen, die die Satelliteneinheit bildet. Der Vorschub der Satelliteneinheit kann manuell oder bevorzugt motorisch erfolgen.

Weiter ist zu erkennen, dass ein am Adapter 30 mittels eines ersten Gelenks 60 verschwenkbar gelagertes, zur Führung der Inspektions- und/oder Sanierungseinheit aus einem Hauptkanal in eine Anschlussleitung eingerichtetes Führungselement 70 vorgesehen ist. Das erste Gelenk 60, das als Dreh-Kippgelenk ausgebildet ist, und somit auch das Führungselement 70 sind im Bereich vor der Vorderachse 22 des Fahrwagens 20 angeordnet.

Der Adapter 30 weist weiter auch an einem dem Führungselement 70 gegenüberliegenden Abschnitt ein zweites Gelenk 80 auf, das ein Verschwenken des Adapters 30 um eine parallel zu den Radachsen angeordnete Achse relativ zum Fahrwagen 20 erlaubt. Das ein Verschwenken des Adapters 30 gegenüber dem Fahrwagen 20 bewirkende zweite Gelenk 80 ist im Bereich der Hinterachse 24 des Fahrwagens 20 angeordnet, sodass eine kompakte Einheit 10 verwirklicht wird.

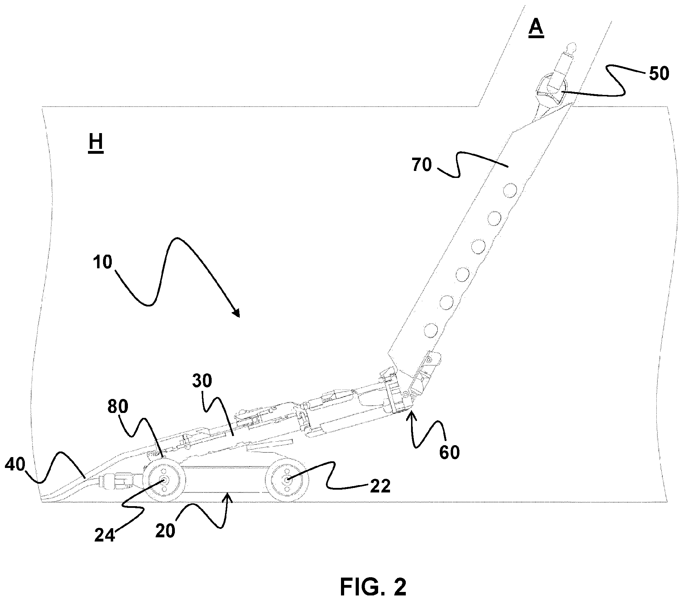

Fig. 2 zeigt die aus Fig. 1 bekannte Vorrichtung mit vollständig angehobenem und zugleich abgewinkeltem Führungselement 70 in einem Hauptkanal H. Es ist deutlich zu erkennen, dass selbst das freie Ende eines kurzen Führungselements 70 durch Zusammenwirken des ersten Gelenks 60 mit dem zweiten Gelenk 80 bei gleichzeitig niedrigem Schwerpunkt auf eine beachtliche Höhe geführt werden kann. Dieses ermöglicht das vorteilhafte Einführen der im gezeigten Beispiel als Fräser ausgebildeten Inspektions- und/oder Sanierungseinheit 50 in die vom Hauptkanal H abzweigende Anschlussleitung A.

Schließlich ist in Fig. 2 zu erkennen, dass der ein Verschwenken des Adapters 30 gegenüber dem Fahrwagen 20 bewirkende Antrieb speziell als Spindelantrieb ausgebildet ist, wobei das Führungselement 70 ein Führungsrohr ist.

## Patentansprüche

1. Vorrichtung (10) zur Kanalrohrinspektion und/oder -sanierung einer von einem Hauptkanal abzweigenden Anschlussleitung, mit einem Fahrwagen (20), der eine Vorderachse (22) und eine Hinterachse (24) aufweist, und einem am Fahrwagen (20) angeordneten lateralen Inspektions- und/oder Sanierungssystem, das
- einen mit dem Fahrwagen (20) verbundenen Adapter (30),
- eine im Adapter (30) mittels eines Schiebestabs (40) verschieblich gelagerte Inspektions- und/oder Sanierungseinheit (50), und
- ein am Adapter (30) mittels eines ersten Gelenks (60) verschwenkbar gelagertes, zur Führung der Inspektions- und/oder Sanierungseinheit (50) aus einem Hauptkanal in eine Anschlussleitung eingerichtetes Führungselement (70) aufweist,
wobei der Adapter (30) an einem dem Führungselement (70) gegenüberliegenden Abschnitt mittels eines zweiten Gelenks (80) um eine parallel zu den Radachsen angeordnete Achse relativ zum Fahrwagen (20) verschwenkbar gelagert ist, wobei
- das ein Verschwenken des Führungselements (70) gegenüber dem Adapter (30) bewirkende erste Gelenk im Bereich vor der Vorderachse (22) des Fahrwagens (20) angeordnet ist,
**dadurch gekennzeichnet, dass**
- der Adapter (30) mit dem Fahrwagen (20) lösbar verbunden ist und
- das ein Verschwenken des Adapters (30) gegenüber dem Fahrwagen (20) bewirkende zweite Gelenk (80) im Bereich der Hinterachse (24) des Fahrwagens (20) angeordnet ist.

2. Vorrichtung (10) nach Anspruch 1, **dadurch gekennzeichnet, dass** das ein Verschwenken des Führungselements (70) gegenüber dem Adapter (30) bewirkende erste Gelenk (60) als Dreh-Kippgelenk ausgebildet ist.

3. Vorrichtung (10) nach einem der vorhergehenden Ansprüche, **dadurch gekennzeichnet, dass** der Adapter (30) einen ein Verschwenken des Adapters (30) gegenüber dem Fahrwagen (20) bewirkenden Antrieb aufweist.

4. Vorrichtung (10) nach Anspruch 3, **dadurch gekennzeichnet, dass** der Antrieb als Spindelantrieb ausgebildet ist.

5. Vorrichtung (10) nach einem der vorhergehenden Ansprüche, **dadurch gekennzeichnet, dass** das Führungselement (70) als Führungsschiene oder als Führungsrohr ausgebildet ist.

## Claims

1. Device (10) for sewer pipe inspection and/or renovation of a connection duct branching off from a main sewer, having a carriage (20) which has a front axle (22) and a rear axle (24), and a lateral inspection and/or renovation system arranged on the carriage (20), having
- an adapter (30) connected to the carriage (20),
- an inspection and/or renovation unit (50) displaceably mounted in the adapter (30) by means of a push rod (40), and
- a guide element (70) pivotably mounted on the adapter (30) by means of a first joint (60) and designed to guide the inspection and/or renovation unit (50) from a main sewer into a connection pipe,
wherein the adapter (30) is mounted on a section opposite the guide element (70) by means of a second joint (80) so as to be pivotable relative to the carriage (20) about an axis arranged parallel to the wheel axles, wherein the first joint which causes the guide element (70) to pivot relative to the adapter (30) is arranged in the region in front of the front axle (22) of the carriage (20),
**characterized in that**
- the adapter (30) is detachably connected to the carriage (20), and
- the second joint (80), which causes the adapter (30) to pivot relative to the carriage (20), is arranged in the region of the rear axle (24) of the carriage (20).

2. Device (10) according to claim 1, **characterized in that** the first joint (60), which causes the guide element (70) to pivot relative to the adapter (30), is designed as a swivel-tilt joint.

3. Device (10) according to one of the preceding claims, **characterized in that** the adapter (30) has a drive which causes the adapter (30) to pivot relative to the carriage (20).

4. Device (10) according to claim 3, **characterized in that** the drive is designed as a spindle drive.

5. Device (10) according to one of the preceding claims, **characterized in that** the guide element (70) is designed as a guide rail or as a guide tube.

## Revendications

1. Dispositif (10) permettant l'inspection et/ou la rénovation de tuyau de canal d'une conduite de raccordement déviée d'un canal principal, comportant un chariot (20) qui présente un essieu avant (22) et un essieu arrière (24), et un système d'inspection et/ou de rénovation latéral disposé sur le chariot (20) qui présente
- un adaptateur (30) relié de manière au chariot (20),
- une unité d'inspection et/ou de rénovation (50) montée de manière à pouvoir coulisser dans l'adaptateur (30) au moyen d'une tige coulissante (40), et
- un élément de guidage (70) monté de manière à pouvoir pivoter sur l'adaptateur (30) au moyen d'une première articulation (60) et conçu pour guider l'unité d'inspection et/ou de rénovation (50) depuis un canal principal dans une conduite de raccordement,
dans lequel l'adaptateur (30) est monté de manière à pouvoir pivoter par rapport au chariot (20) sur une section opposée à l'élément de guidage (70) au moyen d'une seconde articulation (80) autour d'un axe parallèle aux essieux de roues, dans lequel la première articulation provoquant un pivotement de l'élément de guidage (70) par rapport à l'adaptateur (30) est disposée dans la zone devant l'essieu avant (22) du chariot (20),
**caractérisé en ce que**
- l'adaptateur (30) est relié de manière amovible au chariot (20), et
- la seconde articulation (80) provoquant un pivotement de l'adaptateur (30) par rapport au chariot (20) est disposée dans la zone de l'essieu arrière (24) du chariot (20).

2. Dispositif (10) selon la revendication 1, **caractérisé en ce que** la première articulation (60) provoquant un pivotement de l'élément de guidage (70) par rapport à l'adaptateur (30) est réalisée en tant qu'articulation pivotante-basculante.

3. Dispositif (10) selon l'une des revendications précédentes,
**caractérisé en ce que** l'adaptateur (30) présente un entraînement provoquant un pivotement de l'adaptateur (30) par rapport au chariot (20).

4. Dispositif (10) selon la revendication 3, **caractérisé en ce que** l'entraînement est réalisé en tant qu'entraînement à broche.

5. Dispositif (10) selon l'une des revendications précédentes,
**caractérisé en ce que** l'élément de guidage (70) est réalisé en tant que rail de guidage ou en tant que tuyau de guidage.
